# EUROPEAN PATENT APPLICATION

(11) **EP 4 502 898 A1**
(43) Date of publication of application: **05.02.2025**
(21) Application number: 24170279.4
(22) Date of filing: 15.04.2024
(51) Int. Cl.: G06Q 10/10, G06F 9/451

(54) **SESSION-AWARE INTELLIGENT VIRTUAL ASSISTANT**

(30) Priority: 04.08.2023 US 202318230604
(71) Applicant: Intuit Inc., Mountain View, CA 94043 (US)
(72) Inventor: NELLITHEERTHA, Hemanth, Mountain View, 94043 (US); Vivek, Mountain View, 94043 (US); VUYYURU, Kavitha, Mountain View, 94043 (US); NARAYANA, Bhargava, Mountain View, 94043 (US); JAIN, Manish, Mountain View, 94043 (US); SRIVASTAVA, Avichal, Mountain View, 94043 (US); KUMAR A, Arun, Mountain View, 94043 (US)
(74) Representative: D Young & Co LLP

(57) **Abstract**

Certain aspects of the disclosure provide a method of providing an interactive user support interface, the method comprising receiving a communication with a support request for an application. The method further comprising determining, based on the communication, an account associated with the application and determining, based on the account, that the user is an active session in to the application. The method further comprising determining support content responsive to the support request and causing the support content to be displayed within the application based on the determination that the user is an active session in to the application.

## Description

### BACKGROUND

### Field

Aspects of the present disclosure relate to intelligent virtual assistants, and in particular to providing support content within an application based on awareness of a current user session within the application.

### Description of Related Art

An intelligent virtual assistant (IVA) is a software agent that assists users in various tasks (e.g., resolving problems with an application) based on prompts provided by the user. IVAs are often implemented as part of a customer support service to provide automated support to users. For example, IVAs may respond to questions and resolve problems for users over various communication channels, including phone and chat channels.

Conventionally, IVAs provide support outside of the application or service they are supporting. For example, an IVA may respond to a user query with a link to web-based content intended to be responsive to the user's query. The IVA may send the link through, for example, a text message or via an email. Thereafter, the user accesses the content and (hopefully) resolves their problem. This means the IVA generally does not provide direct support to the user within the application or service environment for which the user needs support.

A technical shortcoming of current IVA implementations is thus that they often require the user to navigate between support content provided by the IVA and the application or service being supported by the IVA. In some cases, this navigation may require working with different devices (e.g., when interacting with an IVA on a phone call from a mobile device for help using an application on a desktop computer) or with different applications on a single device (e.g., using a web-browser application to review support content while working in a separate application). In either case, a user being supported by the IVA may lose their place in the application, lose data, or otherwise become frustrated as the user navigates between the multiple devices or applications in an attempt to resolve their problem.

Moreover, current IVA implementations are generally not session-aware. For example, current IVA implementations are generally not aware of whether a user is currently interacting with an application or service (e.g., within an active session of the application or service). Without this awareness, current IVAs are generally limited to asynchronous support channels, such as email or chat, outside of the application or service being supported.

Accordingly, there is a need in the art for improved IVA implementations that can provide session-aware support to users.

### SUMMARY

Particular aspects are set out in the appended independent claims. Various optional embodiments are set out in the dependent claims. Certain aspects provide a method of providing an interactive user support interface, comprising: receiving, from a user via a communication channel, a communication comprising a support request for a web-based application; determining, based on the communication, an account associated with the user and the web-based application; determining, based on the account, that the user is in an active session in the web-based application; determining support content responsive to the support request; and causing the support content to be displayed within a graphical user interface element of the web-based application based on the determination that the user is an active session in the web-based application.

Certain aspects provide a method of using an interactive user support interface, comprising: sending, from a user to a support service via a communication channel, a communication requesting support for a web-based application; receiving, from the support service via the communication channel, an acknowledgment of an active session associated with the web-based application and a user account; interacting with support content responsive to the requested support displayed within a graphical user interface element of the web-based application.

Other aspects provide processing systems configured to perform the aforementioned methods as well as those described herein; computer-readable media comprising instructions that, when executed by a processors of a processing system, cause the processing system to perform the aforementioned methods as well as those described herein; a computer program application embodied on a computer-readable storage medium comprising code for performing the aforementioned methods as well as those further described herein; and a processing system comprising means for performing the aforementioned methods as well as those further described herein.

The following description and the related drawings set forth in detail certain illustrative features of one or more aspects.

### DESCRIPTION OF THE DRAWINGS

The appended figures depict certain aspects and are therefore not to be considered limiting of the scope of this disclosure.
**FIG. 1** depicts an example interactive user support interface for providing user support content within an application.
**FIG. 2** depicts an example communication flow between aspects of an interactive user support interface.
**FIGS. 3A** - **3C** depict various example user interfaces for an application for which interactive user support is provided.
**FIG. 4** depicts an example method for providing interactive user support within an application.
**FIG. 5** depicts an example method for using interactive user support within an application.
**FIG. 6** depicts an example processing system with which aspects of the present disclosure can be performed.

To facilitate understanding, identical reference numerals have been used, where possible, to designate identical elements that are common to the drawings. It is contemplated that elements and features of one embodiment may be beneficially incorporated in other embodiments without further recitation.

### DETAILED DESCRIPTION

Aspects of the present disclosure relate to systems and methods for providing support to users directly within an application via interaction with a session-aware IVA.

As described above, a technical problem with IVAs is that they often provide support content external to an application or service being supported, and further, the support is often provided via a communication channel different from the one used to communicate with the user, such sending support content via a text message or email while communicating with a user via phone. This is not only inconvenient for the user, but it is technically complex and inefficient, as many different applications, and in some cases devices, may be needed to provide support, and the support is not provided where needed most-within the application or service being supported.

Aspects described herein overcome the aforementioned technical problems by providing session-aware IVAs capable of providing support content directly within an application or service as the user actively uses the application or service, in other words, synchronous support. Thus, the session-awareness beneficially enables the IVA to direct support content directly within the application or service.

For example, in one aspect described in more detail below, a support system is configured to perform a method to identify a user requesting support content, determine the user is active within an application and provide the support content within the application. Beneficially, the user may be automatically identified and support content provided directly to the user within the supported application or service. For example, the IVA may provide support content through a deep link within the application, such as to direct the user to a certain functionality of the application in response to the user's question or problem. As another example, the IVA may provide support content through a self-help article displayed within the application to resolve the user's question or problem. In yet another example, the IVA may provide support content through navigating the application to another section, such as an account section, to resolve the user's question or problem. Additionally, support content may be determined based on the application and activity of the user, to provide appropriate support content to the user.

By providing the support content directly within the application, the user need not navigate between multiple separate devices and/or applications. This provides the technical benefits of both a more efficient and effective support experience for the user, as well as a more efficient back-end support service. For example, providing support directly within an application can save time, compute, and communication resources by avoiding the processing and sending of millions (or more) of asynchronous support emails, text messages, or the like, a year.

### Example Customer Support System

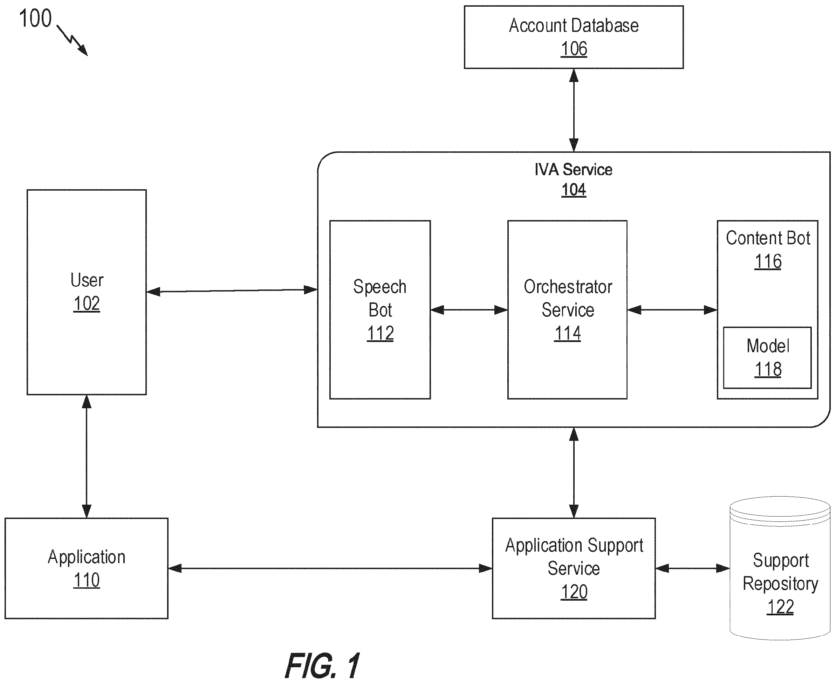

**FIG. 1** depicts an example interactive user support system 100 for providing user support within an application 110 a user 102 is actively using. In some aspects, the application is a web-based application.

When user 102 encounters a problem within application 110, user 102 may contact a support service (in this example IVA service 104) to receive support. In some aspects, user 102 communicates with IVA service 104 via a phone call or via chat messaging.

IVA service 104 is configured to assist user 102, for example, by communicating with and providing support to user 102. In this example, IVA service 104 includes content bot 116, model 118, orchestrator service 114, and speech bot 112. Content bot 116 is configured to analyze and respond to communications, such as from user 102, through model 118. Model 118 uses natural language processing to determine an intent associated with a communication and generate a response.

In some aspects, responses generated by content bot 116 include responsive communications to user 102. For example, content bot 116 may be configured to send responsive communications to speech bot 112 to communicate with user 102, such as through text or spoken word.

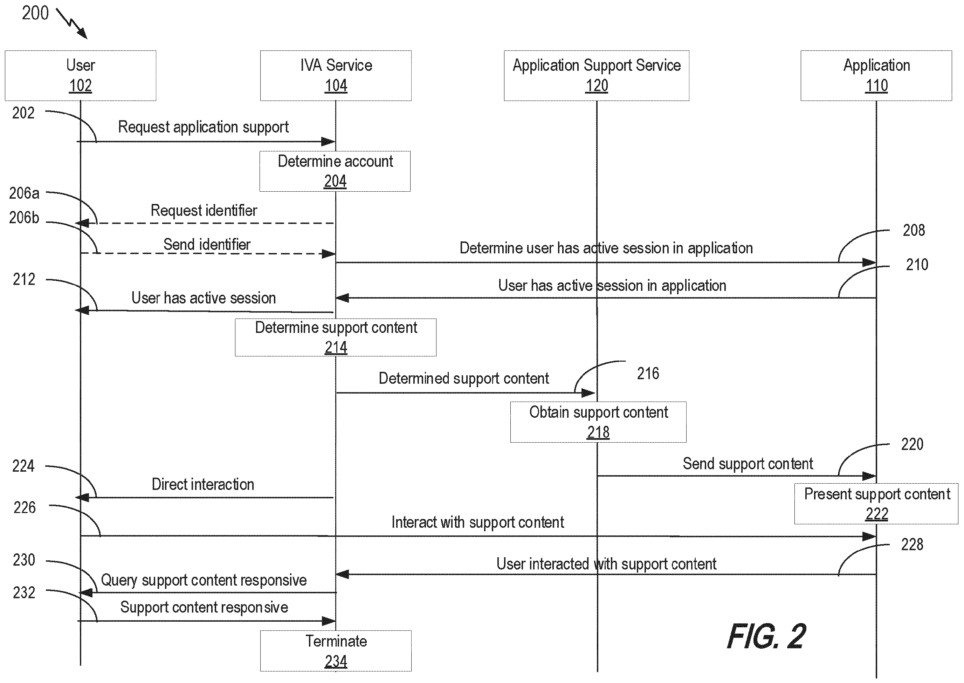

In some aspects, content bot 116 generates a response to communications from orchestrator service 114. Orchestrator service 114 is configured to manage various aspects and operations of IVA service 104. Orchestrator service 114 is further configured to identify user 102 and determine whether user 102 has an account by, in this example, interfacing with account database 106. For example, as described in further detail with respect to **FIG. 2**, orchestrator service 114 may identify user 102 based on an identifier, such as the origin phone number or origin chat identity for the communication from user 102. Orchestrator service 114 uses the identifier to determine a user account from account database 106.

Content bot 116 is further configured to generate a communication to user 102 based on orchestrator service 114 determining a user account associated with user 102 from account database 106. Speech bot 112 is further configured to communicate with user 102, such as through spoken word or text, the communication. For example, the communication may indicate an account associated with user 102 has been found.

Orchestrator service 114 is further configured to determine whether user 102 is active within application 110 through, in this example, application support service 120. Content bot 116 is further configured to generate a communication for speech bot 112 to communicate with user 102 based on orchestrator service 114 determining user 102 is active within application 110. For example, the communication may indicate user 102 is active within application 110.

Content bot 116 is further configured to determine support content responsive to user 102's request for support based on determining the intent associated with the communication. Content bot 116 may instruct application support service 120 to obtain the determined support content from support repository 122. The support content is provided to the user within application 110. For example, a self-help article or video may be displayed with application 110. Beneficially, the user may view both the appropriate support content and application 110 within the same interface (e.g., within the same application window) allowing increased interaction with both the support content and application 110.

In some aspects, application support service 120 may use an application programming interface (API) or a messaging service to communicate with IVA service 104 and/or application 110. For example, application support service 120 may communicate with IVA service 104 via an API of application support service 120, for example, by receiving an API call from IVA service 104, such to determine whether an account associated with user 102 has an active session within application 110 or obtain support content from support repository 122, etc. Application support service 120 may utilize a messaging service to communicate with application 110, for example, to indicate whether user 102's account is active within application 110, or send support content, etc.

In some aspects, application 110 may navigate to the appropriate portion (e.g., screen, interface, module, window, pane, or the like) of application 110 and display support content in connection with the feature. For example, where the appropriate support relates to a feature of application 110, application support service 120 may cause application 110 to automatically navigate to the feature application and display support content related to the feature (e.g., through an instruction, command, or the like). Application support service 120 may use a messaging service to send instructions to application 110. For example, where the appropriate support is to update billing information for the user's account, application 110 may navigate to an account portion and display support content related to updating billing information. In some examples, application support service 120 may send additional instructions to application 110 based on user interaction with application 110. Beneficially, the user need not navigate to the feature because the feature is automatically presented and the relevant support content is displayed on the same interface, allowing the user to interact with the feature based on the support content.

### Example Communication Flow for a Customer Support System

**FIG. 2** depicts an example communication flow 200 between different aspects of an interactive user support system, such as interactive user support system 100 in **FIG. 1**, to provide user support within an application.

In the depicted example, user 102 is using application 110. In some aspects, an application may be a web-based application.

At step 202, user 102 requests support for application 110 from IVA service 104. For example, the support requested for the application may be in regard to a functionality of the application, such as how to find, configure, and/or use a function. As another example, the support requested may be in regard to an account associated with the application, such as to how view or update account information. These are just some examples, and any sort of support request regarding any aspect of application 110 is possible.

User 102 may generally communicate with IVA service 104 through various types of support channels, such as via a phone call, chat messaging service, and the like, to request support.

At step 204, IVA service 104 determines an account associated with user 102 and application 110. In some aspects, IVA service 104 determines the account associated with user 102 based on an identifier associated with the communication. The identifier may be, for example, an origin telephone number or origin chat identification associated with the communication. IVA service 104 may determine an account associated with user 102 based on the identifier, for example, from an account database, such as account database 106 in **FIG. 1****.**

In some aspects, IVA service 104 determines the identifier is not associated with a known user account, such as an account in account database 106 in **FIG. 1****.** In such cases, at step 206a, IVA service 104 then requests an account identifier associated with user 102 from user 102. For example, IVA service 104 may generate a request from user 102 using content bot 116 and send the request to speech bot 112 to communicate to user 102. At step 206b, IVA service 104 receives the account identifier associated with user 102 and determines an account based on the account identifier. For example, content bot 116 of IVA service 104 may analyze a communication received from user 102 using natural language processing to determine an account identifier communicated by user 102. IVA service 104 may then determine an account associated with user 102 based on the account identifier, for example, from an account database.

At step 208, IVA service 104 determines whether user 102 has an active session in application 110. An active session is generally a session in which a user is actively interacting with an application. An active session, for example, may be based on authentication or logging in of a user account. For example, in some aspects, IVA service 104 determines user 102 is an active session in application 110 by determining the account associated with user 102 is currently authenticated with application 110. As another example, in some aspects, IVA service 104 determines user 102 is in an active session in application 110 by determining the account associated with user 102 is logged in to application 110.

At step 210, application 110 indicates user 102 is an active session in application 110. For example, application 110 may indicate the account associated with user 102 is authenticated with application 110, logged in, or otherwise associated with an active session of application 110. Application support service 120 may communicate with IVA service 104 via an API or message service associated with application support service 120.

At step 212, IVA service 104 acknowledges to user 102, that user 102 is an active session in application 110. For example, IVA service 104 may generate a message to user 102 using content bot 116 and send the message to speech bot 112 to communicate to user 102. In examples where the communication channel between user 102 and IVA service 104 is a telephone call, speech bot 112 is configured to use spoken word to communicate the message to user 102. In examples where the communication channel between user 102 and IVA service 104 is a chat service, speech bot 112 is configured to use text to communicate the message to user 102.

At step 214, IVA service 104 determines support content responsive to the support requested by user 102. In some aspects, IVA service 104 determines the support content responsive to the support requested by user 102 by processing the communication with a model, such as model 118 in FIG. 1, to determine an intent of the user associated with the support request and selecting support content based on the intent of the user. The model uses natural language processing to analyze the communication and determine a response.

At step 216, IVA service 104 indicates to application support service 120 the determined support content. IVA service 104 may communicate with application support service 120 via an API or message service associated with application support service 120.

At step 218, application support service 120 obtains the support content from a support repository, for example, support repository 122 in **FIG. 1**, based on the indication from IVA service 104. In some examples, application support service 120 may obtain instructions from support repository 122 for application 110 based on the support content, such instructions may indicate to application 110 the manner of presentation of the support content. Application support service 120 may communicate with application 110 via an API or message service associated with application support service 120.

At step 220, application support service 120 sends the support content and presentation instructions to application 110 for presentation within the application. For example, application support service 120 may send support content and instructions from support repository 122 to application 110 via an API or a messaging service.

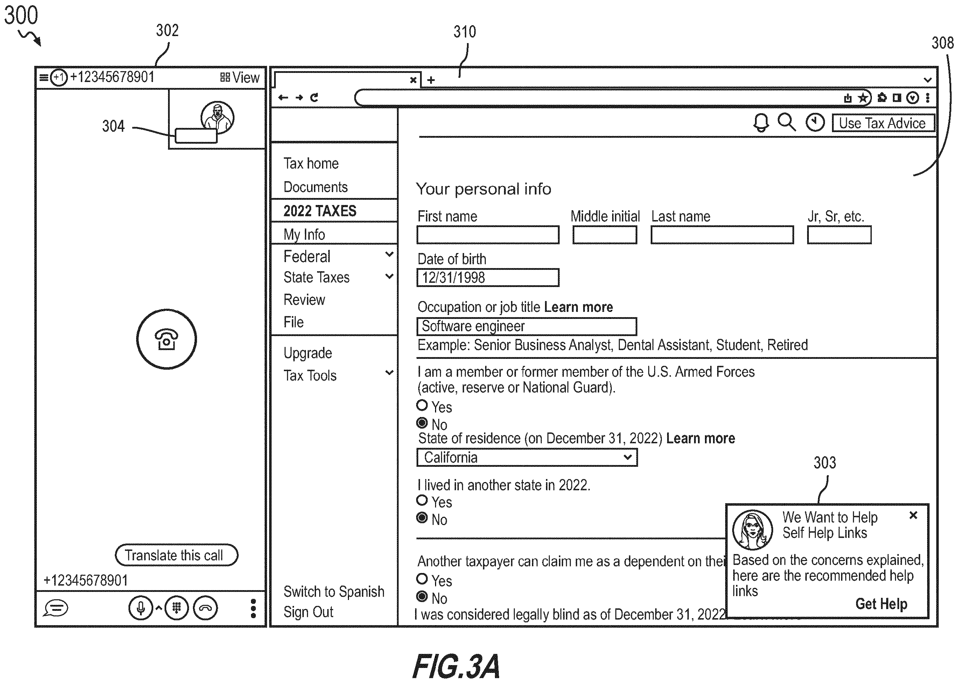

At step 222, application 110 presents the support content, for example, on a graphical user interface element (e.g., as depicted in **FIGS. 3A-3C**) of application 110. In some aspects, the graphical user interface element may be a pop-up window on an existing screen of application 110.

At step 224, IVA service 104 communicates to user 102 the support content is presented in application 110 and directs user 102 to interact with the support content in application 110. For example, IVA service 104 may generate a message to user 102 using content bot 116 and send the message to speech bot 112 to communicate to user 102, such as through text or spoken word.

At step 226, user 102 interacts with the support content presented in application 110. For example, user 102 may interact with the support content in application 110 by interacting with a graphical user interface element (e.g., a screen, pane, window, or the like) of application 110 containing the support content. In another example, user 102 may interact with the support content in application 110 by interacting with application 110 according to an aspect of the support content.

At step 228, application 110 indicates to IVA service 104 that user 102 has interacted with support content in application 110.

At step 230, IVA service 104 queries user 102 whether the support content presented in application 110 is responsive to user 102's request for support. For example, IVA service 104 may generate a message querying user 102 using content bot 116 and send the message to speech bot 112 to communicate to user 102. Steps 228 and/or 230 may be useful for establishing analytics related to the support content offered.

At step 232, user 102 indicates the support content is responsive to the request for support. For example, content bot 116 of IVA service 104 may analyze a communication received from user 102 using natural language processing to determine the support content is responsive to the request for support.

At step 234, IVA service 104 terminates the communication channel with user 102. For example, IVA service 104 may terminate the communication channel with user 102 based on receiving the indication user 102 has interacted with support content in application 110. As another example, IVA service 104 may terminate the communication channel with user 102 based on receiving an indication from user 102 that the support content is responsive to the request for support.

Beneficially, presenting the support content in application 110 to the user during a support session (e.g., synchronizing presentation of the support content with user 102's use of application 110) allows user 102 to receive the support content in a convenient and accessible manner. Further, the user and the application for which support content is requested may be identified, even when the user contacts IVA service 104 outside the application, for example, by calling. Thus, support content may be determined and sent directly to the user without requiring the user to leave the application.

Note that flow 200 is just one example, and other flows including fewer, additional, or alternative steps, consistent with this disclosure, are possible.

### Example Aspects of a Graphical User Interface for Providing Session Aware Support within an Application

**FIGS. 3A-3C** depict various aspects of a graphical user interface 300 displaying a web-browser application 310, such as application 110 as described above. The user interface may be displayed by, for example, a user device. In these examples, a user made a telephone call to telephone number 302 associated with a support service, such as IVA service 104, to request support, such as described with respect to step 202 in **FIG. 2****.**

The support service may determine an account 308 associated with the user based on the origin telephone number 304 the user is calling from. For example, as described with respect to step 204 in **FIG. 2**, the support service may use the origin telephone number to determine an account associated with application 310.

The support service may further determine whether the user has an active session within application 310, such as described with respect to steps 208-210 of **FIG. 2****.** The user has an active session, for example, because account 308 is logged into application 310.

The support service and the user may continue to communicate via the telephone call. For example, the support service may indicate to the user an account associated with the user was determined and the account is associated with an active session within application 310, such as described with respect to step 212 in **FIG. 2****.**

The support service may further determine an intent based on the user's communications with a model, such as model 118 in **FIG. 1**, and determine support content responsive to the user's communications, such as described with respect to step 214 in **FIG. 2****.** The support content may be sent to application 310 to be presented to the user.

In **FIG. 3A**, the support content is presented as a pop-up window 303 (a type of graphical user interface element) within the existing screen of application 310. As depicted, pop-up window 303 comprises self-help links based on the user's request for support from the support service. Beneficially, the pop-up window 303 provides the support content within application 310 as the user is interacting with application 310. This allows the user to interact with the support content at the same time as the user interacts with application 310.

The support service may communicate to the user that the support content is displayed on pop-up window 303 is on the interface of application 310 and direct the user to interact with pop-up window 303, as described with respect to step 224 in **FIG. 2****.**

Application 310 may track as the user interacts with the pop-up window 303, for example, the user may click on pop-up window 303.

The support service may query the user to determine whether the pop-up window 303 is responsive to the user's request for support and listen for the user to indicate the pop-up window 303 is responsive to the request for support, such as described with respect to steps 230-232 in **FIG. 2****.** In some aspects, if the pop-up window 303 is not responsive, the support service may determine further support content based on the user's request for support. The support service may then terminate the phone call with the user.

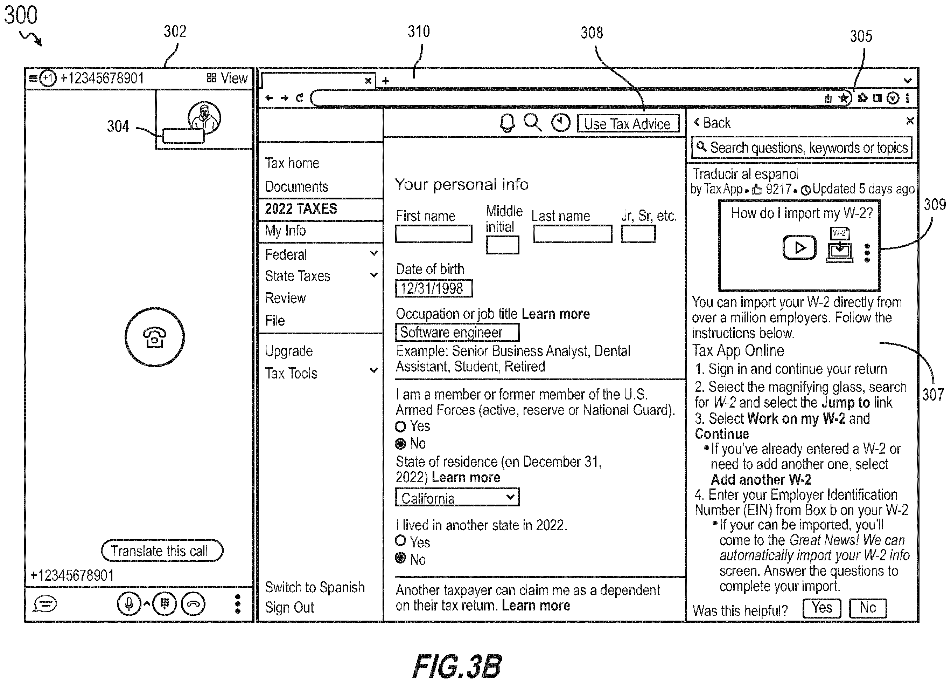

In **FIG. 3B**, the support content is depicted as a panel 305 graphical user interface element. Support content panel 305 includes self-help text 307 and self-help video 309. A user may interact with various elements of support content panel 305. For example, a user may read self-help text 307 to obtain assistance with application 310. As another example, a user may watch self-help video 309 to obtain assistance with application 310. Beneficially, support content is displayed on the same interface as the application, as a panel 305, allowing a user to readily interact with both support content through panel 305 and the application.

The support service may communicate to the user that the support content is displayed on panel 305 on the interface of application 310 and direct the user to interact with panel 305, as described with respect to step 224 in **FIG. 2****.**

Application 310 may track as the user interacts with panel 305, for example, the user may watch self-help video 309 or scroll through self-help text 307.

The support service may query the user to determine whether self-help video 309 or self-help text 307 are responsive to the user's request for support and listen for the user to indicate the support content is responsive to the request for support, such as described with respect to steps 230-232 in **FIG. 2****.** In some aspects, if the support content is not responsive, the support service may determine further support content based on the user's request for support. The support service may then terminate the phone call with the user.

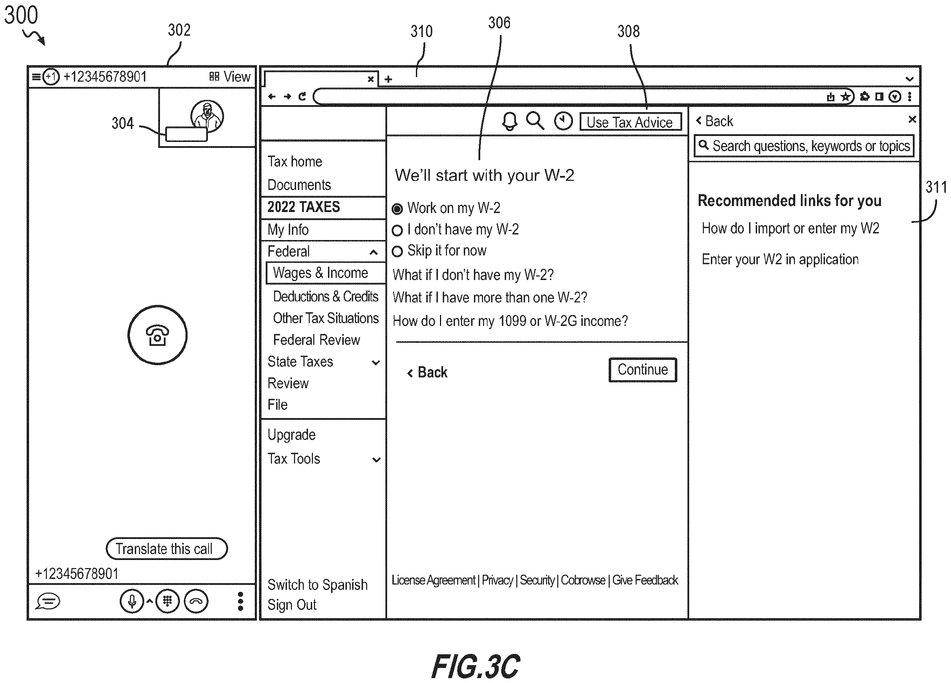

In **FIG. 3C**, support content includes link 311 to navigate the interface to portion 306 of application 310. For example, when the support content includes a feature of application 310 accessible with portion 306, the support content includes link 311, which automatically navigates application 310 to portion 306 to access that feature when the user clicks on link 311. Beneficially, the support service controls application 310 to provide the support content.

The support service may communicate to the user that the support content is available by clicking on link 311 on the interface of application 310 as described with respect to step 224 in **FIG. 2****.**

Application 310 may track as the user interacts with the link 311, for example, the user may click on link 311.

The support service may query the user to determine whether the link 311 is responsive to the user's request for support and listen for the user to indicate the link 311 is responsive to the request for support, such as described with respect to steps 230-232 in **FIG. 2****.** In some aspects, if the link 311 is not responsive, the support service may determine further support content based on the user's request for support. The support service may then terminate the phone call with the user.

### Example Method for Providing Assistance within an Application

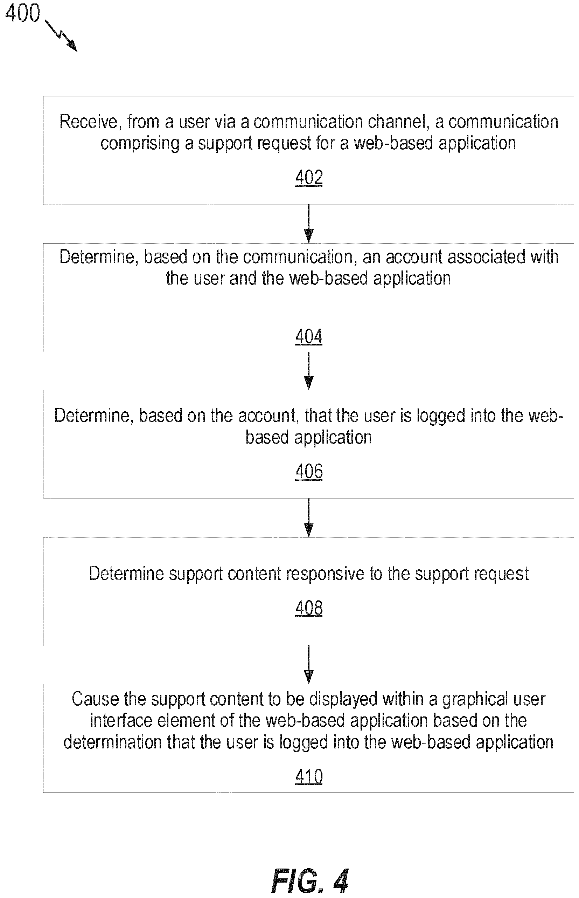

**FIG. 4** depicts an example method 400 for providing an interactive user support interface. Method 400 may be performed, for example, by IVA service 104 in **FIG. 1** or **FIG. 2****,**

Method 400 begins at step 402 with receiving, from a user via a communication channel, a communication comprising a support request for a web-based application, such as described at step 202 of **FIG. 2****,**

Method 400 proceeds to step 404 with determining, based on the communication, an account associated with the user and the web-based application, such as described at step 204 of **FIG. 2****.**

In some aspects, determining the account associated with the user and the web-based application comprises determining an identifier associated with the communication and determining the account associated with the user based on the identifier.

In some aspects, the communication channel is a telephone call; the identifier associated with the communication is a telephone number; and the communication is received by an IVA.

In some aspects, the communication channel is a chat service; the identifier associated with the communication is a chat identification; and the communication is received by an IVA.

In some aspects, determining the account associated with the user comprises: determining an identifier associated with the communication; determining that the identifier is not associated with a known user account; requesting, from the user via the communication channel, an account identifier associated with the user; and determining the account associated with the user based on the account identifier, such as described with respect to steps 206a-206b in **FIG. 2****.**

Method 400 then proceeds to step 406 with determining, based on the account that the user is in an active session in to the web-based application such as described at steps 208-210 of **FIG. 2****.**

In some aspects, determining that the user is in the active session in the web-based application, comprises determining the account associated with the user is currently authenticated with the web-based application for example, based on information from account database 106 in **FIG. 1****.** Notably, while a web-based application is used in various examples described herein, method 400 may be applied to non-web-based (e.g., native) applications as well.

In some aspects, determining that the user is in the active session in the web-based application, comprises determining the account associated with the user is logged into the web-based application.

Method 400 then proceeds to step 408 with determining support content responsive to the support request such as described at step 214 of **FIG. 2****.**

In some aspects, determining the support content responsive to the support request, comprises processing the communication with a natural language processing model, to determine an intent of the user associated with the support request and selecting the support content based on the intent of the user, such as with content bot 116 in **FIG. 1****.**

Method 400 then proceeds to step 410 with causing the support content to be displayed within a graphical user interface element of the web-based application based on the determination that the user is in the active session in to the web-based application such as described at step 220 of **FIG. 2****.**

In some aspects, the graphical user interface element of the web-based application comprises a pop-up window within an existing screen of the web-based application.

In some aspects, method 400 further comprises sending, to the user via the communication channel, an acknowledgment that the user is in the active session in the web-based application, such as described at step 212 in **FIG. 2****;** and directing the user, via the communication channel, to interact with the support content within the web-based application, such as described with respect to step 224 in **FIG. 2****.**

In some aspects, method 400 further comprises sending, to the user via the communication channel, a query regarding whether the support content is responsive to the support request, such as described at step 230 in **FIG. 2****;** receiving, from the user via the communication channel, an acknowledgment that the support content is responsive to the support request, such as described at step 232 in **FIG. 2****;** and terminating the communication in response to the acknowledgment, such as described at step 234 in **FIG. 2****.**

In some aspects, method 400 further comprises receiving an indication that the user has interacted with the support content within the web-based application, such as described at step 228 in **FIG. 2****.**

Note that method 400 is just one example, and other flows including fewer, additional, or alternative steps, consistent with this disclosure, are possible.

### An Example Method of Obtaining Assistance within an Application

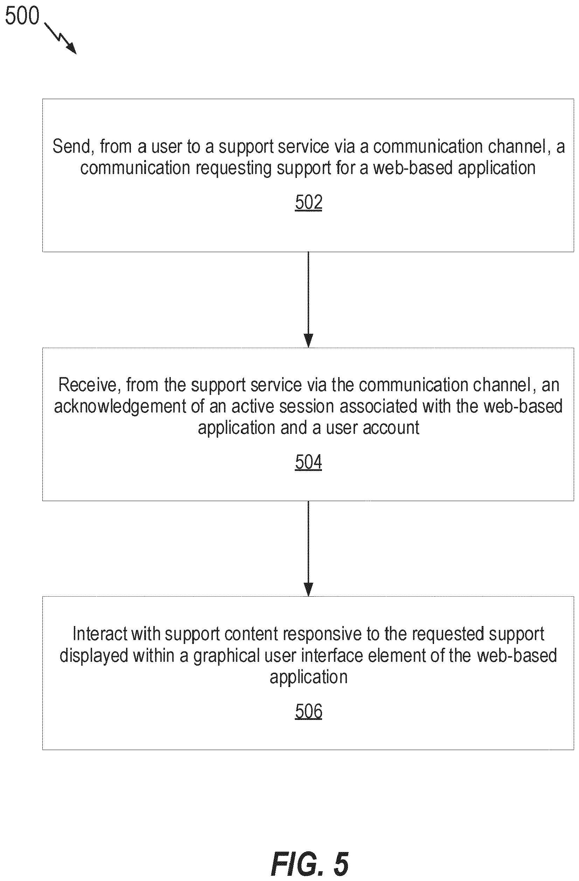

**FIG. 5** depicts an example method 500 for using an interactive user support interface.

Initially method 500 beings at step 502 with sending, from a user, such as user 102 in **FIG. 1** and **FIG. 2****,** to a support service, such as IVA service 104 in **FIG. 1** and **FIG. 2****,** via a communication channel, a communication requesting support for a web-based application, such as described at step 202 in **FIG. 2****.**

Method 500 then proceeds to step 504 with receiving, from the support service via the communication channel, an acknowledgment of an active session associated with the web-based application and a user account, such as described at step 212 in **FIG. 2****.** In some aspects, the user account is associated with an identifier associated with the communication.

Method 500 then proceeds to step 506 with interacting with support content responsive to the requested support. In some cases, the user may interact with the support content as it is displayed within a graphical user interface element of the web-based application, such as described at step 226 in **FIG. 2****.**

In some aspects, method 500 further comprises receiving, via the communication channel, an instruction interact with the support content within the web-based application, such as described at step 224 in **FIG. 2****.**

In some aspects, method 500 further comprises receiving, via the communication channel, a request for an account identifier; sending, via the communication channel, the account identifier; wherein, the user account is associated with the account identifier, such as described with respect to steps 206a-206b in **FIG. 2****.**

In some aspects, method 500 further comprises receiving, via the communication channel, a query regarding whether the support content is responsive to the support request, such as described at step 230 in **FIG. 2****;** sending, via the communication channel, an acknowledgment that the support content is responsive to the support request, such as described at step 232 in **FIG. 2****;** and terminating the communication based on the acknowledgment such as described at step 234 in **FIG. 2****.**

Beneficially, during a support session, the user receives support content with use of the application, allowing the user to receive the support content in a convenient and accessible manner. Additionally, the user and the application may be identified even when the user contacts the support service outside the application. Thus, the support content may be determined and sent directly to the user without requiring the user to leave the application.

Note that method 500 is just one example, and other flows including fewer, additional, or alternative steps, consistent with this disclosure, are possible.

### Example Processing System for Providing Assistance within an Application

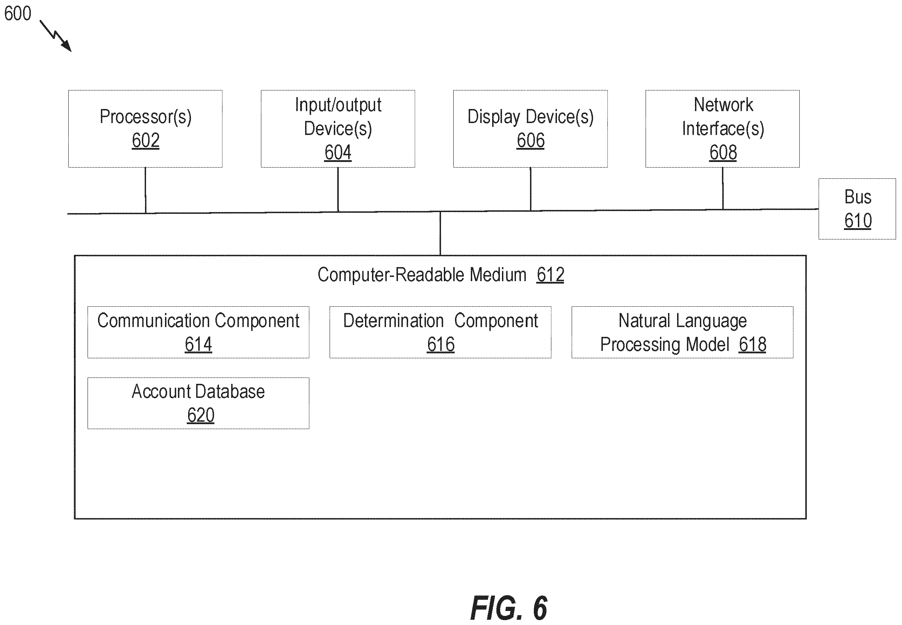

**FIG. 6** depicts an example processing system 600 configured to perform various aspects described herein, including, for example, flow 200 as described above with respect to **FIG. 2****,** method 400 as described above with respect to **FIG. 4****,** or method 500 as described above with respect to **FIG. 5****.**

Processing system 600 is generally be an example of an electronic device configured to execute computer-executable instructions, such as those derived from compiled computer code, including without limitation personal computers, tablet computers, servers, smart phones, smart devices, wearable devices, augmented and/or virtual reality devices, and others.

In the depicted example, processing system 600 includes one or more processors 602, one or more input/output devices 604, one or more display devices 606, and one or more network interfaces 608 through which processing system 600 is connected to one or more networks (e.g., a local network, an intranet, the Internet, or any other group of processing systems communicatively connected to each other), and computer-readable medium 612.

In the depicted example, the aforementioned components are coupled by a bus 610, which may generally be configured for data and/or power exchange amongst the components. Bus 610 may be representative of multiple buses, while only one is depicted for simplicity.

Processor(s) 602 are generally configured to retrieve and execute instructions stored in one or more memories, including local memories like the computer-readable medium 612, as well as remote memories and data stores. Similarly, processor(s) 602 are configured to retrieve and store application data residing in local memories like the computer-readable medium 612, as well as remote memories and data stores. More generally, bus 610 is configured to transmit programming instructions and application data among the processor(s) 602, display device(s) 606, network interface(s) 608, and computer-readable medium 612. In certain aspects, processor(s) 602 are included to be representative of a one or more central processing units (CPUs), graphics processing unit (GPUs), tensor processing unit (TPUs), accelerators, and other processing devices.

Input/output device(s) 604 may include any device, mechanism, system, interactive display, and/or various other hardware components for communicating information between processing system 600 and a user of processing system 600. For example, input/output device(s) 604 may include input hardware, such as a keyboard, touch screen, button, microphone, and/or other device for receiving inputs from the user. Input/output device(s) 604 may further include display hardware, such as, for example, a monitor, a video card, and/or other another device for sending and/or presenting visual data to the user. In certain aspects, input/output device(s) 604 is or includes a graphical user interface.

Display device(s) 606 may generally include any sort of device configured to display data, information, graphics, user interface elements, and the like to a user. For example, display device(s) 606 may include internal and external displays such as an internal display of a tablet computer or an external display for a server computer or a projector. Display device(s) 606 may further include displays for devices, such as augmented, virtual, and/or extended reality devices.

Network interface(s) 608 provide processing system 600 with access to external networks and thereby to external processing systems. Network interface(s) 608 can generally be any device capable of transmitting and/or receiving data via a wired or wireless network connection. Accordingly, network interface(s) 608 can include a communication transceiver for sending and/or receiving any wired and/or wireless communication. For example, Network interface(s) 608 may include an antenna, a modem, a LAN port, a Wi-Fi card, a WiMAX card, cellular communications hardware, near-field communication (NFC) hardware, satellite communication hardware, and/or any wired or wireless hardware for communicating with other networks and/or devices/systems. In certain aspects, network interface(s) 608 includes hardware configured to operate in accordance with the Bluetooth^{®} wireless communication protocol.

Computer-readable medium 612 may be a volatile memory, such as a random access memory (RAM), or a nonvolatile memory, such as nonvolatile random access memory, phase change random access memory, or the like. In this example, computer-readable medium 612 includes communication component 614, determination component 616, model 618, and account database 620.

In certain aspects, communication component 614 is configured to send and receive communications, for example, receiving communications from a user, and sending communications to the user. In some aspects, communication component may be, for example, speech bot 112 in **FIG. 1****.**

In certain aspects, determination component 616 is configured to make determinations, for example, determine an account associated with the user and an application, determine that the user is in an active session in to the application, determine support content responsive to the support request; determine an identifier, determine an account based on the identifier. In some aspects, determination component may be part of IVA service 104 in **FIG. 1****.**

In certain aspects, model 618 is configured to process communications to determine an intent of the communication. In some aspects, natural language processing model may be used by content bot 116.

In certain aspects, account database 620 may be a data base configured to store user account data, for example, accounts and identifiers for users of an application. In some aspects, account database may be account database 106 in **FIG. 1****.**

Note that **FIG. 6** is just one example of a processing system consistent with aspects described herein, and other processing systems having additional, alternative, or fewer components are possible consistent with this disclosure.

### Example Clauses

Implementation examples are described in the following numbered clauses:
Clause 1: A method of providing an interactive user support interface, comprising receiving, from a user via a communication channel, a communication comprising a support request for a web-based application; determining, based on the communication, an account associated with the user and the web-based application; determining, based on the account, that the user is in an active session in the web-based application; determining support content responsive to the support request; and causing the support content to be displayed within a graphical user interface element of the web-based application based on the determination that the user is in the active session in the web-based application.
Clause 2: The method of clause 1, further comprising: sending, to the user via the communication channel, an acknowledgment that the user is in the active session in the web-based application; and directing the user, via the communication channel, to interact with the support content within the web-based application.
Clause 3: The method of any one of clauses 1-2, wherein determining the account associated with the user and the web-based application comprises: determining an identifier associated with the communication; and determining the account associated with the user based on the identifier.
Clause 4: The method of clause 3, wherein: the communication channel is a telephone call; the identifier associated with the communication is a telephone number; and the communication is received by an intelligent virtual assistant.
Clause 5: The method of clause 3, wherein: the communication channel is a chat service; the identifier associated with the communication is a chat identification; and the communication is received by an intelligent virtual assistant.
Clause 6: The method of any one of clauses 1-5, wherein determining the account associated with the user comprises: determining an identifier associated with the communication; determining that the identifier is not associated with a known user account; requesting, from the user via the communication channel, an account identifier associated with the user; and determining the account associated with the user based on the account identifier.
Clause 7: The method of any one of clauses 1-6, wherein determining that the user is in the active session in web-based application, comprises determining the account associated with the user is currently authenticated with the web-based application.
Clause 8: The method of any one of clauses 1-6, wherein determining that the user is the active session in to web-based application, comprises determining the account associated with the user is logged in to the web-based application.
Clause 9: The method of any one of clauses 1-8, wherein determining the support content responsive to the support request, comprises: processing the communication with a natural language processing model to determine an intent of the user associated with the support request; and selecting the support content based on the intent of the user.
Clause 10: The method of any one of clauses 1-9, wherein the graphical user interface element of the web-based application comprises a pop-up window within an existing screen of the web-based application.
Clause 11: The method of any one of clauses 1-10, further comprising: sending, to the user via the communication channel, a query regarding whether the support content is responsive to the support request; receiving, from the user via the communication channel, an acknowledgement that the support content is responsive to the support request; and terminating the communication in response to the acknowledgement.
Clause 12: The method of any one of clauses 1-11, further comprising receiving an indication that the user has interacted with the support content within the web-based application.
Clause 13: A method of using an interactive user support interface, comprising: sending, from a user to a support service via a communication channel, a communication requesting support for a web-based application; receiving, from the support service via the communication channel, an acknowledgment of an active session associated with the web-based application and a user account; interacting with support content responsive to the requested support displayed within a graphical user interface element of the web-based application.
Clause 14: The method of Clause 13, further comprising: receiving, via the communication channel, an instruction to interact with the support content within the web-based application.
Clause 15: The method of any one of Clause 13-14, wherein the user account is associated with an identifier associated with the communication.
Clause 16: The method of Clause 15, wherein: the communication channel is a telephone call; the identifier associated with the communication is a telephone number; and the support service is an intelligent virtual assistant.
Clause 17: The method of Clause 15, wherein: the communication channel is a chat service; the identifier associated with the communication is a chat identification; and the support service is an intelligent virtual assistant.
Clause 18: The method of any one of Clauses 13-17, further comprising: receiving, via the communication channel, a request for an account identifier; sending, via the communication channel, the account identifier, wherein the user account is associated with the account identifier.
Clause 19: The method of any one of Clauses 13-18, further comprising: receiving, via the communication channel, a query regarding whether the support content is responsive to the support request; sending, via the communication channel, an acknowledgment that the support content is responsive to the support request; and terminating the communication based on the acknowledgment.
Clause 20: A processing system, comprising: a memory comprising computer-executable instructions; and a processor configured to execute the computer-executable instructions and cause the processing system to perform a method in accordance with any one of Clauses 1-19.
Clause 21: A processing system, comprising means for performing a method in accordance with any one of Clauses 1-19.
Clause 22: A computer-readable medium storing program code for causing a processing system to perform the steps of any one of Clauses 1-19.
Clause 23: A computer program application embodied on a computer-readable storage medium comprising code for performing a method in accordance with any one of Clauses 1-19.

Thus, from one perspective, there has now been described a method of providing an interactive user support interface, the method comprising receiving a communication with a support request for an application. The method further comprising determining, based on the communication, an account associated with the application and determining, based on the account, that the user is an active session in to the application. The method further comprising determining support content responsive to the support request and causing the support content to be displayed within the application based on the determination that the user is an active session in to the application.

### Additional Considerations

The preceding description is provided to enable any person skilled in the art to practice the various embodiments described herein. The examples discussed herein are not limiting of the scope, applicability, or embodiments set forth in the claims. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. § 112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

Further examples of feature combinations taught by the present disclosure are set out in the following numbered clauses:
1. A method of providing an interactive user support interface, comprising:
   receiving, from a user via a communication channel, a communication comprising a support request for a web-based application;
   determining, based on the communication, an account associated with the user and the web-based application;
   determining, based on the account, that the user is in an active session in the web-based application;
   determining support content responsive to the support request; and
   causing the support content to be displayed within a graphical user interface element of the web-based application based on the determination that the user is in an active session in the web-based application.
2. The method of Clause 1, further comprising:
   sending, to the user via the communication channel, an acknowledgement that the user is in the active session in to the web-based application; and
   directing the user, via the communication channel, to interact with the support content within the web-based application.
3. The method of Clause 1 or Clause 2, wherein determining the account associated with the user and the web-based application comprises:
   determining an identifier associated with the communication; and
   determining the account associated with the user based on the identifier.
4. The method of Clause 3, wherein:
   the communication channel is a telephone call;
   the identifier associated with the communication is a telephone number; and
   the communication is received by an intelligent virtual assistant.
5. The method of Clause 3, wherein:
   the communication channel is a chat service;
   the identifier associated with the communication is a chat identification; and
   the communication is received by an intelligent virtual assistant.
6. The method of any preceding Clause, wherein determining the account associated with the user comprises:
   determining an identifier associated with the communication;
   determining that the identifier is not associated with a known user account;
   requesting, from the user via the communication channel, an account identifier associated with the user; and
   determining the account associated with the user based on the account identifier.
7. The method of any preceding Clause, wherein determining that the user is in the active session in to the web-based application, comprises determining the account associated with the user is currently authenticated with the web-based application.
8. The method of any preceding Clause, wherein determining that the user is in the active session in to the web-based application, comprises determining the account associated with the user is logged in to the web-based application.
9. The method of any preceding Clause, wherein determining the support content responsive to the support request, comprises:
   processing the communication with a natural language processing model to determine an intent of the user associated with the support request; and
   selecting the support content based on the intent of the user.
10. The method of any preceding Clause, wherein the graphical user interface element of the web-based application comprises a pop-up window within an existing screen of the web-based application.
11. The method of any preceding Clause, further comprising:
   sending, to the user via the communication channel, a query regarding whether the support content is responsive to the support request;
   receiving, from the user via the communication channel, an acknowledgement that the support content is responsive to the support request; and
   terminating the communication in response to the acknowledgement.
12. The method of any preceding Clause, further comprising receiving an indication that the user has interacted with the support content within the web-based application.
13. A processing system for providing an interactive user support interface, comprising: a memory comprising computer-executable instructions; and a processor configured to execute the computer-executable instructions and cause the processing system to:
   receive, from a user via a communication channel, a communication comprising a support request for a web-based application;
   determine, based on the communication, an account associated with the user and the web-based application;
   determine, based on the account, that the user is an active session in to the web-based application;
   determine support content responsive to the support request; and
   cause the support content to be displayed within a graphical user interface element of the web-based application based on the determination that the user is in an active session in the web-based application.
14. A method of using an interactive user support interface, comprising:
   sending, from a user to a support service via a communication channel, a communication requesting support for a web-based application;
   receiving, from the support service via the communication channel, an acknowledgment of an active session associated with the web-based application and a user account; and
   interacting with support content responsive to the requested support displayed within a graphical user interface element of the web-based application.
15. The method of Clause 14, further comprising: receiving, via the communication channel, an instruction to interact with the support content within the web-based application.
16. The method of Clause 14 or Clause 15, wherein the user account is associated with an identifier associated with the communication.
17. The method of Clause 16, wherein:
   the communication channel is a telephone call;
   the identifier associated with the communication is a telephone number; and
   the support service is an intelligent virtual assistant.
18. The method of Clause 16, wherein:
   the communication channel is a chat service;
   the identifier associated with the communication is a chat identification; and
   the support service is an intelligent virtual assistant.
19. The method of any of Clauses 14 to 18, further comprising:
   receiving, via the communication channel, a request for an account identifier; and
   sending, via the communication channel, the account identifier, wherein the user account is associated with the account identifier.
20. The method of any of Clauses 14 to 19, further comprising:
   receiving, via the communication channel, a query regarding whether the support content is responsive to the request for support;
   sending, via the communication channel, an acknowledgment that the support content is responsive to the request for support; and
   terminating the communication based on the acknowledgment.

## Claims

1. A method of providing an interactive user support interface, comprising:
receiving, from a user via a communication channel, a communication comprising a support request for a web-based application;
determining, based on the communication, an account associated with the user and the web-based application;
determining, based on the account, that the user is in an active session in the web-based application;
determining support content responsive to the support request; and
causing the support content to be displayed within a graphical user interface element of the web-based application based on the determination that the user is in an active session in the web-based application.

2. The method of Claim 1, further comprising:
sending, to the user via the communication channel, an acknowledgement that the user is in the active session in to the web-based application; and
directing the user, via the communication channel, to interact with the support content within the web-based application.

3. The method of Claim 1 or Claim 2, wherein determining the account associated with the user and the web-based application comprises:
determining an identifier associated with the communication; and
determining the account associated with the user based on the identifier.

4. The method of Claim 3, wherein:
the communication channel is a telephone call;
the identifier associated with the communication is a telephone number; and
the communication is received by an intelligent virtual assistant.

5. The method of Claim 3, wherein:
the communication channel is a chat service;
the identifier associated with the communication is a chat identification; and
the communication is received by an intelligent virtual assistant.

6. The method of any preceding Claim, wherein determining the account associated with the user comprises:
determining an identifier associated with the communication;
determining that the identifier is not associated with a known user account;
requesting, from the user via the communication channel, an account identifier associated with the user; and
determining the account associated with the user based on the account identifier.

7. The method of any preceding Claim, wherein determining that the user is in the active session in to the web-based application, comprises determining the account associated with the user is currently authenticated with the web-based application.

8. The method of any preceding Claim, wherein determining that the user is in the active session in to the web-based application, comprises determining the account associated with the user is logged in to the web-based application.

9. The method of any preceding Claim, wherein determining the support content responsive to the support request, comprises:
processing the communication with a natural language processing model to determine an intent of the user associated with the support request; and
selecting the support content based on the intent of the user.

10. The method of any preceding Claim, wherein the graphical user interface element of the web-based application comprises a pop-up window within an existing screen of the web-based application.

11. The method of any preceding Claim, further comprising:
sending, to the user via the communication channel, a query regarding whether the support content is responsive to the support request;
receiving, from the user via the communication channel, an acknowledgement that the support content is responsive to the support request; and
terminating the communication in response to the acknowledgement.

12. The method of any preceding Claim, further comprising receiving an indication that the user has interacted with the support content within the web-based application.

13. A processing system for providing an interactive user support interface, comprising: a memory comprising computer-executable instructions; and a processor configured to execute the computer-executable instructions and cause the processing system to:
receive, from a user via a communication channel, a communication comprising a support request for a web-based application;
determine, based on the communication, an account associated with the user and the web-based application;
determine, based on the account, that the user is an active session in to the web-based application;
determine support content responsive to the support request; and
cause the support content to be displayed within a graphical user interface element of the web-based application based on the determination that the user is in an active session in the web-based application.

14. A method of using an interactive user support interface, comprising:
sending, from a user to a support service via a communication channel, a communication requesting support for a web-based application;
receiving, from the support service via the communication channel, an acknowledgment of an active session associated with the web-based application and a user account; and
interacting with support content responsive to the requested support displayed within a graphical user interface element of the web-based application.

15. The method of Claim 14, further comprising: receiving, via the communication channel, an instruction to interact with the support content within the web-based application.
